**Europäisches Patentamt**

**European Patent Office**

**Office européen des brevets**

(19)

(11) Veröffentlichungsnummer: **0 107 840**
**B1**

(12) **EUROPÄISCHE PATENTSCHRIFT**

(45) Veröffentlichungstag der Patentschrift:
**07.01.87**

(21) Anmeldenummer: **83110352.8**

(22) Anmeldetag: **17.10.83**

(51) Int. Cl.⁴: **C 03 C 25/06,** H 04 B 9/00,
G 02 B 6/24

(54) **Verfahren zum Herstellen einer optischen Koppelvorrichtung, insbesondere Verfahren zur Verminderung der Wandstärke von aus Quarzglas bestehenden Ummantelungen von Lichtwellenleiter-Glasfasern.**

(30) Priorität: **21.10.82 DE 3239011**

(43) Veröffentlichungstag der Anmeldung:
**09.05.84 Patentblatt 84/19**

(45) Bekanntmachung des Hinweises auf die Patenterteilung:
**07.01.87 Patentblatt 87/2**

(84) Benannte Vertragsstaaten:
**AT BE CH DE FR GB IT LI NL SE**

(56) Entgegenhaltungen:
**FR - A - 2 292 987**
**GB - A - 2 069 175**
**US - A - 3 874 781**
**US - A - 4 265 699**

**COMPUTER DESIGN, Band 19, Nr. 11, November 1980,
Seiten 39-41, Pontiac, Illinois, US, W.L. SCHUMACHER:
"Multipurpose connector mixes electrical and optical
signals"**

(73) Patentinhaber: **Siemens Aktiengesellschaft Berlin und
München, Wittelsbacherplatz 2, D-8000 München 2 (DE)**

(72) Erfinder: **Schön, Josef, Dipl.-Ing., Olgastrasse 11,
D-8000 München 19 (DE)**
Erfinder: **Hoffmann, Rudolf, Dipl.-Ing., Mainzer
Strasse 24, D-8000 München 40 (DE)**

## Beschreibung

Die Erfindung bezieht sich auf ein Verfahren zum Herstellen einer optischen Koppelvorrichtung, bei der eine grössere Anzahl von eng nebeneinander angeordneten Glasfaser-Lichtwellenleitern mit ihren Stirnseiten optisch an die Stirnseite eines Mischerelementes angeschlossen ist, unter Verwendung handelsüblicher Lichtwellenleiter, die einen aus Quarzglas bestehenden Mantel (4) von ca. 20µ Dicke aufweisen. Bei diesem Verfahren wird der Mantel einer jeden Glasfaser in einem Endbereich (5) durch ein zum Flüssigkeitsspiegel rechtwinkeliges Eintauchen dieses Endbereiches in eine Ätzlösung auf eine Dicke von ca. 3 bis 5µ abgeätzt.

Eine optische Koppelvorrichtung der mit vorliegender Erfindung angestrebten Art ist z.B. aus der US-A-3874781 bekannt. Diese Koppelvorrichtung verwendet ein stabförmiges zylindrisches Mischerelement aus transparentem Material, an dessen einer Stirnseite die Stirnseiten von zu einem Bündel zusammengefassten Lichtwellenleitern enden. Von einem dieser Lichtwellenleiter in das Mischerelement eingestrahlte optische Signale werden von der verspiegelten anderen Stirnseite des Mischerelementes reflektiert und bei entsprechend gewählter Länge des Mischerelementes in die einzelnen Lichtwellenleiter des Bündels eingespeist. Bei einer solchen optischen Koppelvorrichtung ist es erwünscht, dass die einzelnen Lichtwellenleiter des Bündels möglichst zwischenraumfrei aneinander liegen, um die Koppelverluste möglichst gering zu halten. Ein die einzelnen Lichtwellenleiter des Bündels jeweils umgebender Mantel, der dazu dient, die optischen Signale in einem Lichtwellenleiter am Verlassen des Lichtwellenleiters zu hindern, muss daher, zumindest im Bereich der optischen Koppelvorrichtung, möglichst dünn ausgebildet werden.

Hierzu ist es aus der US-A-4265699 schon bekannt, Lichtwellenleiterenden für eine bestimmte Zeit in eine Ätzlösung einzutauchen, die NH$_4$ HF$_2$ enthält, und so durch teilweises Abätzen den Durchmesser des Lichtwellenleiters in einem Endbereich zu vermindern.

Jedoch hat ein auf diese Weise im Durchmesser verminderter Lichtwellenleiterendabschnitt eine relativ steile Übergangszone zu dem nicht vom Ätzvorgang erfassten übrigen Lichtwellenleiter. Dies führt zu einer erhöhten Bruchgefahr des Lichtwellenleiters im Grenzbereich zwischen dem Lichtwellenleiter ursprünglicher Dicke und dem Endbereich mit demgegenüber verminderter Dicke.

Aufgabe vorliegender Erfindung ist es daher, ein Verfahren der eingangs genannten Art derart weiterzubilden, dass eine solche Bruchgefahr wesentlich vermindert wird.

Erfindungsgemäss ergibt sich die Lösung dieser Aufgabe dadurch, dass das Eintauchen unter Auf- und Abbewegen des Lichtwellenleiters in Verlaufsrichtung unter ständigem Belassen des Endbereiches in der gesättigten Lösung erfolgt.

Geht man so vor, so erhält man vorteilhaft konisch verlaufende Übergangszonen zwischen den Endbereichen und dem mit dem Mantel ursprünglicher Dicke bedeckten Lichtwellenleiter, wodurch die Gefahr eines Bruches im Grenzbereich zwischen dem Lichtwellenleiter ursprünglicher Dicke und einem Lichtwellenleiterendbereich mit demgegenüber geringerem Durchmesser sicher vermieden wird.

In weiterer Ausgestaltung der Erfindung kann vorgesehen sein, dass die Endbereiche mehrerer Glasfasern, deren Mantel in den Endbereichen in seiner Dicke vermindert worden ist, in der entsprechend aufgebohrten Aufnahmebohrung eines metallischen Steckerstiftes einer handelsüblichen Lichtwellenleitersteckvorrichtung gebündelt fixiert und die Stirnseiten der gebündelten Endbereiche zusammen mit der Stirnseite des Stiftes plangeschliffen werden, und dass in einer entsprechend bemessenen Aufnahmebohrung eines weiteren Stiftes, der dem zum Bündeln der Endbereiche verwendeten Stift zumindest in einem dessen Stirnseite nahen Mantelabschnitt entspricht, ein einziger Lichtwellenleiter mit einem Kerndurchmesser, der dem Durchmesser des gebündelten Endbereiches entspricht, als Mischerelement fixiert und dessen Stirnseite mit der Stirnseite des weiteren Stiftes plangeschliffen wird.

Auf diese Weise sind die Endbereiche der gebündelten Lichtwellenleiter einerseits und ein als Mischerelement verwendeter Lichtwellenleiter andererseits, der einen entsprechenden Durchmesser aufweist, jeweils in Steckerstiften üblicher Lichtwellenleiterstecker gefasst. Durch Einführen dieser Steckerstifte in eine Führungshülse von beiden Seiten der Hülse her können nun die Stirnseiten der gebündelten Lichtwellenleiter einfach mit der Stirnseite des als Mischerelement verwendeten Lichtwellenleiters optisch gekoppelt werden.

Weiter kann vorgesehen sein, dass das andere Ende des Mischerelementes in gleicher Weise in einem weiteren Steckerstift fixiert wird und dass das an jedem Ende in einem Stift gefasste Mischerelement mittels jeweils einer auf den Aussendurchmesser der Steckstifte abgestimmten Führungshülse mit einem ein Lichtwellenleiterbündel zusammenfassenden Steckerstift zusammengesteckt ist.

Auf diese Weise kann das Mischerelement einfach in eine abschnittsweise aus einem Bündel von Lichtwellenleitern bestehende optische Übertragungsstrecke eingefügt werden, wobei die auf der einen Seite des Mischerelementes von einem jeden Glasfaser-Lichtwellenleiter übertragenen optischen Signale im Mischerelement vereinigt, und das so vereinigte Signal in jedem Glasfaser-Lichtwellenleiter auf der anderen Seite des Mischerelements eingespeist werden.

Nachfolgend wird anhand von vier Figuren das Verfahren nach der Erfindung noch näher erläutert.

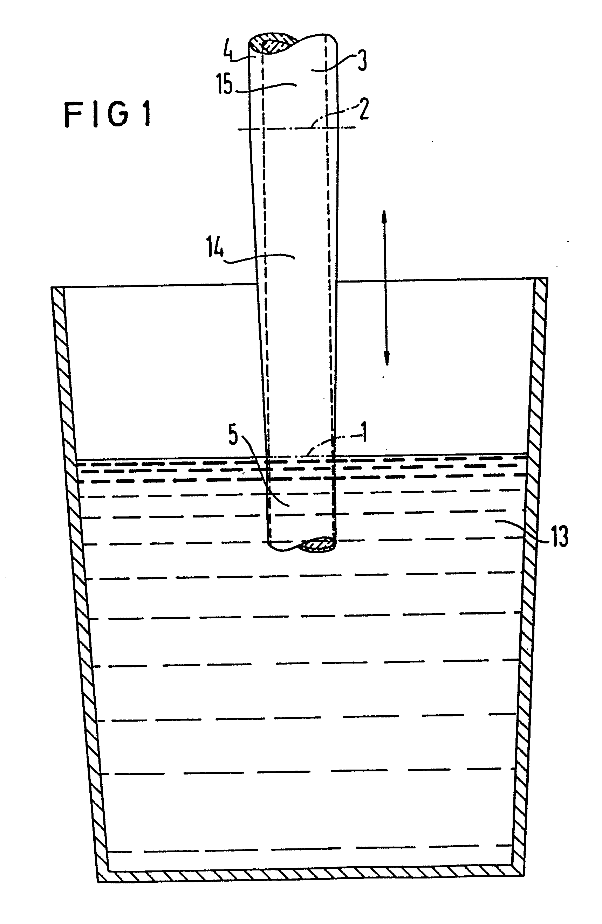

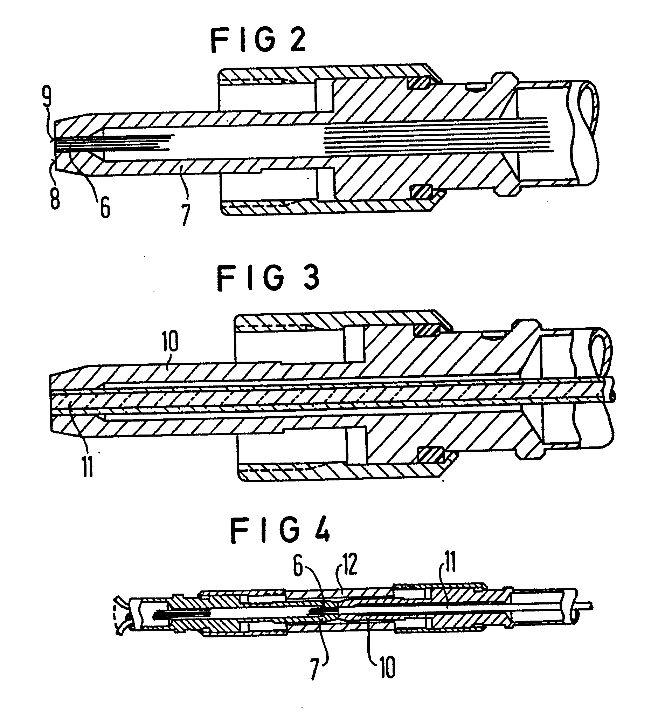

Fig. 1 zeigt stark vergrössert die sich verjüngende Übergangszone zwischen einem Lichtwellenleiterabschnitt 15 mit unveränderter Manteldicke und dem Lichtwellenleiterendbereich 5 mit verminderter Manteldicke, wie sie durch Eintauchen eines Lichtwellenleiterendbereiches 5 in eine geeignete Ätzlösung, vorzugsweise in eine gesättigte Lösung 13 von (NH₄)F·HF in Verlaufsrichtung des Lichtwellenleiters unter Auf- und Abbewegen des Lichtwellenleiters in Verlaufsrichtung unter ständigem Belassen des Endbereiches des Lichtwellenleiters in der gesättigten Lösung erhalten werden kann. Die Lösung hat dabei vorzugsweise eine Temperatur von ca. 45°C.

Die ursprüngliche Manteldicke von ca. 20 µ handelsüblicher Lichtwellenleiter wird dabei in einem Endbereich 5 des Lichtwellenleiters auf ca. 3 bis 5 µ vermindert. Dieser Endbereich 5 ist der bei der Bewegung des Lichtwellenleiters in der Lösung ständig in dieser verbleibende Bereich des Lichtwellenleiters. Der bei der Bewegung des Lichtwellenleiters in seiner Verlaufsrichtung zeitweilig sich innerhalb und ausserhalb der Lösung befindende Teilbereich 14 des Lichtwellenleiters ergibt dabei die sich verjüngende Übergangszone, die in Fig. 1 zwischen den strichpunktierten Linien 1, 2 zu erkennen ist, wobei der eigentliche lichtleitende Kern des Lichtwellenleiters mit 3 und der den Kern umgebende Mantel aus Quarzglas, der verhindert, dass die im Kern 3 transportierten Lichtsignale den Kern 3 verlassen können, mit 4 bezeichnet ist.

Die sich verjüngende Übergangszone vermindert die Bruchgefahr am Übergang zum Endbereich 5.

Die Endbereiche 5 mehrerer Lichtwellenleiter lassen sich nun dicht nebeneinander angeordnet zu einem Lichtwellenleiterbündel 6 zusammengefasst in der entsprechend aufgebohrten konzentrischen Bohrung eines Steckerstiftes 7 einer Steckvorrichtungshälfte einer Lichtwellenleitersteckvorrichtung fixieren. Durch Planschleifen der Stirnseiten 8, 9 von Steckerstift 7 und Lichtwellenleiterbündel 6 erhält man eine Steckvorrichtungshälfte, in deren Steckerstift 7 anstatt eines einzigen Lichtwellenleiters ein Bündel von dicht aneinanderliegenden Lichtwellenleitern fixiert ist, das aber ebenso gehandhabt werden kann, als wäre im Stift 7 nur ein einziger Lichtwellenleiter fixiert.

Befestigt man in gleicher Weise einen einzigen Lichtwellenleiter, dessen Kern einen Durchmesser hat, der dem Durchmesser des Lichtwellenleiterbündels 6 entspricht (Fig. 3), so kann man durch Zusammenstecken eines Steckerstiftes 7 und eines Steckerstiftes 10, der den Einzellichtwellenleiter 11 enthält, z. B. mit Hilfe einer Führungshülse 12 (Fig. 4), deren Führungsbohrung auf die Aussendurchmesser der Steckerstifte 7 und 10 abgestimmt ist, das Lichtwellenleiterbündel 6 einfach mit dem als Mischerelement wirksamen Einzellichtwellenleiter 11 koppeln und speist dadurch über die einzelnen Lichtwellenleiter des Bündels 6 ankommende optische Signale in den als Mischerelement wirksamen Einzellichtwellenleiter 11 ein.

Fixiert man das andere Ende des Lichtwellenleiters 11 ebenfalls in einem Steckerstift 10 und verbindet diesen wiederum mit einem Steckerstift 7, in dem ein Bündel 6 von Lichtwellenleitern fixiert ist, so überträgt der als Mischerelement verwendete Einzellichtwellenleiter 11 ein aus sämtlichen ankommenden optischen Signalen zusammengesetztes optisches Signal in einen jeden der Lichtwellenleiter, der auf der abgehenden Seite des Einzellichtwellenleiters 11 mit diesem gekoppelt ist.

**Patentansprüche**

1. Verfahren zum Herstellen einer optischen Koppelvorrichtung, bei der eine grössere Anzahl von eng nebeneinander angeordneten Glasfaser-Lichtwellenleitern mit ihren Stirnseiten optisch an die Stirnseite eines Mischerelementes angeschlossen ist, unter Verwendung handelsüblicher Lichtwellenleiter, die einen aus Quarzglas bestehenden Mantel (4) von ca. 20 µ Dicke aufweisen, bei dem der Mantel einer jeden Glasfaser in einem Endbereich (5) durch ein zum Flüssigkeitsspiegel rechtwinkeliges Eintauchen dieses Endbereiches in eine Ätzlösung auf eine Dicke von ca. 3 bis 5 µ abgeschätzt wird, dadurch gekennzeichnet, dass das Eintauchen unter Auf- und Abbewegen des Lichtwellenleiters in Verlaufsrichtung unter ständigem Belassen des Endbereiches in der gesättigten Lösung erfolgt.

2. Verfahren nach Anspruch 1, dadurch gekennzeichnet, dass die Endbereiche (5) mehrerer Glasfasern, deren Mantel (4) in den Enbereichen in seiner Dicke vermindert worden ist, in der entsprechend aufgebohrten Aufnahmebohrung eines metallischen Steckerstiftes (7) einer handelsüblichen Lichtwellenleitersteckvorrichtung gebündelt fixiert, und die Stirnseiten (9) der gebündelten Endbereiche (6) zusammen mit der Stirnseite (8) des Stiftes (7) plangeschliffen werden.

3. Verfahren nach Anspruch 2, dadurch gekennzeichnet, dass in einer entsprechend bemessenen Aufnahmebohrung eines weiteren Stiftes (10), die dem zum Bündeln der Endbereiche verwendeten Stift (7) zumindest in einem dessen Stirnseite (8) nahen Mantelabschnitt entspricht, ein einziger Lichtwellenleiter (11) mit einem Kerndurchmesser, der dem gemeinsamen Durchmesser der gebündelten Endbereiche entspricht, als Mischerelement fixiert und dessen Stirnseite mit der Stirnseite des weiteren Stiftes plangeschiffen wird.

4. Verfahren nach Anspruch 3, dadurch gekennzeichnet, dass das andere Ende des Mischerelementes in gleicher Weise in einem weiteren Steckerstift (10) fixiert wird.

5. Verfahren nach einem der Ansprüche 3 oder 5, dadurch gekennzeichnet, dass das an jedem Ende in einem Stift (10) gefasste Mischerelement mittels jeweils einer auf den Aussendurchmesser der Steckerstifte abgestimmten Führungshülse (12) mit einem ein Lichtwellenleiterbündel (6) zusammenfassenden Steckerstift (7) zusammengesteckt ist.

6. Verfahren nach dem Anspruch 1, dadurch gekennzeichnet, dass die Ätzlösung eine gesättigte Lösung von (NH₄)F·HF ist, die eine Temperatur von ca. 45°C aufweist.

## Claims

1. A process for the production of an optical connector in which a large number of glass fibre light waveguides closely arranged one beside another, are optically connected to the end face of a mixer element, using commercial light waveguides which have a casing (4) consisting of quartz glass and a thickness of about 20 μ, and in which in an end region (5), the casing of each glass fibre is etched to a thickness of about 3 to 5 μ by immersing said end region in an etching solution at right angles to the liquid surface, characterised in that the immersion is effected by moving the light waveguide upwards and downwards in the direction in which it extends, whilst constantly keeping the end region in the saturated solution.

2. A process as claimed in Claim 1, characterised in that the end regions (5) of a plurality of glass fibres, whose casings (4) have been reduced in thickness in the end regions, are fixed as a bundle in the correspondingly bored receiving bore of a metal plug pin (7) of a commercial light waveguide plug-type device, and the end faces (9) of the bundled end regions, (6), thogether with the end face (8) of the pin (7), are ground flat.

3. A process as claimed in claim 2, characterised in that in a correspondingly dimensioned receiving bore of a further pin (10), which corresponds to the pin (7) used for bunching the end regions, at least in a casing section which is near the end face thereof (8), a single light waveguide (11) having a core diameter which corresponds to the joint diameter of the bundled end region, is fixed to serve as a mixer element, and whose end face, together with the end face of the further pin, is ground flat.

4. A process as claimed in claim 3, characterised in that the other end of the mixer element is similarly fixed in a further plug pin (10).

5. A process as claimed in one of claims 3 or 5, characterised in that the mixer element mounted in each end in a pin (10) is plugged to a plug pin (7) which holds together a bundle (6) of light waveguides, by means of a guide sleeve (12) which is adapted to the outer diameter of the plug pins.

6. A process as claimed in claim 1, characterised in that the etching solution is a saturated solution of $(NH_4)F \cdot HF$ which is at a temperature of about 45°C.

## Revendications

1. Procédé pour fabriquer un dispositif de couplage optique, dispositif dans lequel un nombre relativement grand de guides d'ondes de lumière, constitués par des fibres de verre, sont disposés étroitement les uns à côté des autres et sont raccordés optiquement, par leurs faces terminales, à la face terminale d'un élément mélangeur, procédé dans lequel on utilise des guides d'ondes de lumière du commerce, possédant une gaine (4) en silice d'une épaisseur d'environ 20 μm, et dans lequel la gaine de chaque fibre de verre est rongée, sur une portion terminale (5), jusqu'à une épaisseur d'environ 3 à 5 μm, en immergeant cette portion terminale perpendiculairement à la surface du liquide dans une solution d'attaque, caractérisé en ce que l'immersion s'effectue en animant le guide d'ondes de lumière de mouvements de montée et d'abaissement, dans le sens de sa longueur, en laissant la portion terminale en permanence dans la solution, laquelle est saturée.

2. Procédé selon la revendication 1, caractérisé en ce que l'on fixe les portions terminales (5) de plusieurs fibres de verre dont la gaine (4) a été réduite en épaisseur, sur les portions terminales, en les assemblant en faisceau, dans l'ouverture de réception, alésée en conséquence, d'une fiche métallique (7) d'un dispositif connecteur à enfichage du commerce, pour guides d'ondes de lumière, et on dresse à la meule les faces terminales (9) des portions terminales (6), assemblées en faisceau, ensemble avec la face terminale (8) de la fiche (7).

3. Procédé selon la revendication 2, caractérisé en ce que, dans une ouverture de réception dimensionnée en conséquence d'une fiche supplémentaire (10), qui correspond à la fiche (7) employée pour assembler en faisceau lesdites portions terminales, tout au moins par une partie de paroi latérale proche de cette fiche, on fixe un seul guide d'ondes de lumière (11), possédant un diamètre de cœur qui correspond au diamètre global des portions terminales assemblées en faisceau, guide d'ondes qui sert d'élément mélangeur et dont on dresse à la meule la face terminale, ensemble avec la face terminale de la fiche supplémentaire.

4. Procédé selon la revendication 3, caractérisé en ce que l'on fixe l'autre extrémité de l'élément mélangeur de la même façon dans une fiche de connecteur supplémentaire (10).

5. Procédé selon la revendication 3 ou 5, caractérisé en ce que l'on fixe l'élément mélangeur à chaque extrémité dans une fiche (10) et on l'assemble par emboîtement, à chaque extrémité, avec une fiche de connecteur (7) assemblant un faisceau (6) de guides d'ondes de lumière, au moyen d'une douille de guidage (12) qui est adaptée au diamètre extérieur des fiches.

6. Procédé selon la revendication 1, caractérisé en ce que la solution d'attaque est une solution saturée de $(NH_4)F \cdot HF$ qui présente une température d'environ 45°C.

FIG 1

FIG 2

FIG 3

FIG 4